(19) **Europäisches Patentamt**
**European Patent Office**
**Office européen des brevets**

(11) **EP 4 588 894 A1**

(12) **EUROPEAN PATENT APPLICATION**
published in accordance with Art. 153(4) EPC

(43) Date of publication:
**23.07.2025 Bulletin 2025/30**

(21) Application number: **23865132.7**

(22) Date of filing: **07.08.2023**

(51) International Patent Classification (IPC):
**C01G 25/02** *(2006.01)*   **C01F 17/235** *(2020.01)*

(52) Cooperative Patent Classification (CPC):
**C01F 17/235; C01G 25/02; Y02P 20/54**

(86) International application number:
**PCT/JP2023/028683**

(87) International publication number:
**WO 2024/057772 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 JP 2022147577**

(71) Applicants:
• **Tohoku University**
**Sendai-shi, Miyagi 980-8577 (JP)**

• **Super Nano Design Co.,Ltd**
**Sendai-shi Miyagi 980-8579 (JP)**

(72) Inventors:
• **AJIRI Tadafumi**
**Sendai-shi, Miyagi 980-8577 (JP)**
• **NOGUCHI Takio**
**Sendai-shi, Miyagi 980-8579 (JP)**

(74) Representative: **Hoffmann Eitle**
**Patent- und Rechtsanwälte PartmbB**
**Arabellastraße 30**
**81925 München (DE)**

(54) **METHOD FOR PRODUCING ORGANICALLY MODIFIED FINE OXIDE PARTICLES, AND ORGANICALLY MODIFIED FINE OXIDE PARTICLES**

(57)   [Problem to be Solved] To provide a simple method for obtaining organically modified oxide fine particles with enhanced dispersibility in solvents by enabling uniform organic modification of oxide particles through a common technique applied across the entire surface, regardless of the type of oxide.

[Solution] The present invention relates to a method for producing organically modified oxide fine particles. This method comprises a hydroxide or similar formation step of forming hydroxide and/or oxyhydroxide on the surface of oxide particles; and an organic modification step of organically modifying the oxide particles having the hydroxide and/or the oxyhydroxide formed on their surface in a reaction field of a supercritical, subcritical, or gas-phase aqueous solvent to obtain organically modified oxide fine particles. In the fine particles, as measured by Fourier Transform Infrared Spectroscopy (FT-IR), the ratio $PI_2/PI_1$ of the maximum peak intensity $PI_2$ in the closed interval with 3,000 $cm^{-1}$ and 3,700 $cm^{-1}$ as both ends, which is attributed to O-H, to the maximum peak intensity $PI_1$ in the closed interval with 2,800 $cm^{-1}$ and 3,000 $cm^{-1}$ as both ends, which is attributed to C-H, is preferably 0.01 or more.

[FIG. 3]

IR Spectrum of Organically Modified Fine Particles
(Examples 1-1, 1-2)

EP 4 588 894 A1

**Description**

Technical Field

The present invention relates to a method for producing organically modified oxide fine particles and to organically modified oxide fine particles.

Background Art

Fine particles, particularly particles of nanometer size (nanoparticles), exhibit various unique and excellent properties, characteristics, and functions, and are therefore expected to realize technologies that meet the demands for higher precision, miniaturization, and weight reduction in all materials and products beyond the current level. In this way, nanoparticles attract attention as materials that enable high functionality, high performance, high density, and advanced precision, including industrial and engineering materials such as nanostructure modifiers for ceramics, optical functional coating materials, electromagnetic shielding materials, secondary battery materials, fluorescent materials, electronic component materials, magnetic recording materials, and abrasive materials, as well as pharmaceutical and cosmetic materials. Recent fundamental research on nanoparticles has led to successive discoveries such as ultra-high functionality due to quantum size effects, the emergence of new physical properties, and the synthesis of new substances, drawing significant interest from the industrial sector.

However, nanoparticles are rarely used as powders; instead, they are used by dispersing them in solvents, dispersing them in polymers or supporting them on solid materials, and in such applications, high-concentration complete dispersion or a phase separation/self-organization structure formation is required. For the practical application of such nanoparticles, it is necessary to freely control the affinity of each ultrafine particle with the medium and to impart specific functions; thus, it is necessary to establish a technology for modifying the particle surface to enable the addition of such functions. As a convenient method for stably imparting functions that allow fine particles, particularly nanoparticles, to be used and utilized, organic modification is mentioned, and modification through strong bonding is specifically required.

As fine particles have various useful properties and functions, many synthesis methods, including supercritical synthesis, have been proposed and developed. Even in these synthesis processes, there are new challenges that do not exist in conventional powder-handling processes for micrometer-sized powders. It is necessary to develop methods for recovering the synthesized fine particles or nanoparticles and for maintaining them in a dispersed and stabilized state without causing aggregation, even after recovery. Furthermore, when used, they must also be well dispersed in resins, plastics, and solvents. In particular, nanoparticles synthesized in aqueous solutions often have hydrophilic surfaces, making their recovery from water difficult. Such nanoparticles also have the issue of poor compatibility with organic solvents and resins.

To satisfy these needs, it is considered necessary to perform surface modification on nanoparticles with organic substances according to each intended purpose. For example, desirable modifications include modification with polymers similar to resins or the introduction of functional groups identical to those of solvents. If surface modification can be performed in water, it also becomes easier to separate and recover nanoparticles from water. However, to perform surface modification on nanoparticles synthesized in water with organic substances, it is desirable for water and the organic substance to form a homogeneous phase, but in such cases, the available modifying agents are limited to amphiphilic surfactants or lower alcohols that can dissolve in water. Furthermore, even if nanoparticles are recovered by some method, the recovered nanoparticles are highly prone to aggregation, and once nanoparticles have aggregated, they are difficult to redisperse, even when dispersants are used. Surface modification of such nanoparticles is also extremely difficult.

It is known that under high-temperature and high-pressure conditions, water and organic substances form a homogeneous phase; for example, in high-temperature and high-pressure water, dehydration reactions occur under catalyst-free conditions between alcohols and sugars, between carboxylic acids and alcohols, and between carboxylic acids and amines.

Furthermore, it has been reported that when metal oxide particles are synthesized in a hydrothermal synthesis environment under high temperature and high pressure in the presence of organic substances, homogeneous phase reactions between the particle surfaces and the organic substances occur, resulting in fine particles with strongly bound surface modifications (Patent Literature 1). It has also been reported that since the obtained nanoparticles are organically modified, they separate from water along with residual organic substances after cooling, making them easy to recover (Patent Literature 1).

Citation List

Patent Literature

[Patent Literature 1] JP3925932B2

Summary of the Invention

Problems to be Solved by the Invention

However, metal oxides undergo high-temperature heat treatment during their manufacturing process or post-treatment process, and their surfaces are often stable and low in reactivity, making effective organic modification difficult even when using supercritical reactions.

The present invention has been made in view of such problems, and it aims to enable uniform organic modification across the entire surface of oxide particles using a common method, regardless of the type of oxide particles, thereby further enhancing dispersibility in solvents and allowing for the simple provision of organically modified oxide fine particles.

Means for Solving the Problems

As a result of intensive research, the inventors of the present invention have found that by forming hydroxide and/or oxyhydroxide on the surface of oxide particles and performing organic modification via the hydroxide or similar, uniform organic modification can be achieved across the entire surface of the fine particles, leading to the completion of the present invention. Specifically, the present invention provides the following:

The invention according to a first aspect provides a method for producing organically modified oxide fine particles, comprising: an organic modification step of organically modifying the oxide particles having the hydroxide and/or the oxyhydroxide formed on their surface in a reaction field of a supercritical, subcritical, or gas-phase aqueous solvent to obtain organically modified oxide fine particles.

The invention according to a second aspect provides a method according to the first aspect, wherein the organic modification step is performed subsequent to the hydroxide or similar formation step.

The invention according to a third aspect provides a method according to the first aspect, wherein a first apparatus performing the hydroxide or similar formation step and a second apparatus performing the organic modification step are physically separated, and the hydroxide or similar formation step is performed in the first apparatus, followed by the organic modification step in the second apparatus.

The invention according to a fourth aspect provides a method according to the first aspect, wherein the hydroxide or similar formation step and the organic modification step are performed in the same reaction field, the two steps are kinetically separated, and the organic modification step is performed after the hydroxide or similar formation step is performed.

In water, hydroxyl groups exist on the surface of oxide particles. For example, when the raw material particles are metal oxides, the presence of hydroxyl groups on the surface of the raw material particles is due to the following equilibrium reaction:

$$MO + H_2O = M(OH) \quad (1)$$

The solubility of metal oxides in water is high in high-temperature water and subcritical water, which means that the transient state of the dissolution reaction, that is, the formation of hydroxides, proceeds more easily but significantly decreases above the critical point. That is, at low temperatures, the formation of OH groups does not occur unless a very high concentration of alkali is present, but in subcritical water, OH group formation occurs more easily, similar to hydrolysis. By contrast, dehydration tends to occur more readily in the supercritical region.

In the organic modification reaction below, the leftward reaction (reverse reaction) is a well-known reaction in the hydrolysis of alkoxides and similar, and it is a reaction that readily occurs even at room temperature when water is added. As this reaction is an exothermic reaction, it is suppressed at higher temperatures; conversely, the rightward reaction (dehydration) becomes more favorable.

Moreover, in the organic modification reaction, in the rightward reaction (dehydration), the polarity of the product is lower compared with the reaction system, making lower solvent polarity more favorable (solvent effect). The dielectric constant of water decreases at higher temperatures, dropping to 15 or lower below 350°C, rapidly decreasing to approximately 1-10, especially near or above the critical point. As a result, the dehydration reaction is accelerated even more than the above-mentioned temperature effect.

$$M(OH) + ROH = M(OR) + H_2O = M \cdot R + 2H_2O$$

$$M(OH) + RCOOH = M(OCO\text{-}R) + H_2O = MR + H_2O + CO_2$$

$$M(OH) + RCHO = M(OH)CR + H_2O = MC{=}R + 2H_2O, MCR + 2H_2O, MR + H_2 + CO_2$$

$$M(OH) + RSH = MSR + H_2O \text{ (Reduction)}$$

(These equations are referred to as (2).)

Therefore, a subcritical environment is preferable for presenting OH groups on the surface of metal oxides, whereas a supercritical environment is preferable for promoting the organic modification reaction.

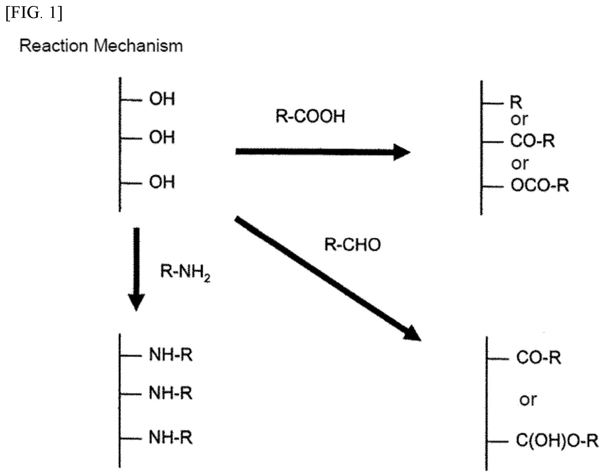

It is known that the attack on hydroxyl groups by amines proceeds at around room temperature in the presence of strong acids or through substitution by Cl, but in high-temperature and high-pressure water, an exchange with OH occurs. Regarding organic substances, it has been confirmed that the amination of hexanol proceeds with carboxylic acid as a catalyst between hexanamide and hexanol, and it is inferred that a similar reaction takes place. A part of the reaction mechanism of the present method is schematically shown in FIG. 1 as an example.

In the case of thiols, it has been reported that reduction may occur in the reaction field, and it is inferred that partial reduction occurs on the surface of metal oxides, leading to thiol addition reactions.

As described above, the optimal reaction conditions for the formation of hydroxyl groups on the oxide surface according to Equation (1) and for the organic modification reaction according to Equation (2) are different. Therefore, for example, when the reaction of equation (1) is on the left side (i.e. on the dehydration side), setting reaction conditions, such as the coexistence of acid, is extremely important to induce the modification reaction and may sometimes be difficult. Even when the inorganic reaction of Equation (2) is on the right side (hydration) (i.e. under subcritical conditions in which OH group formation occurs), the modification reaction must proceed under conditions that induce dehydration.

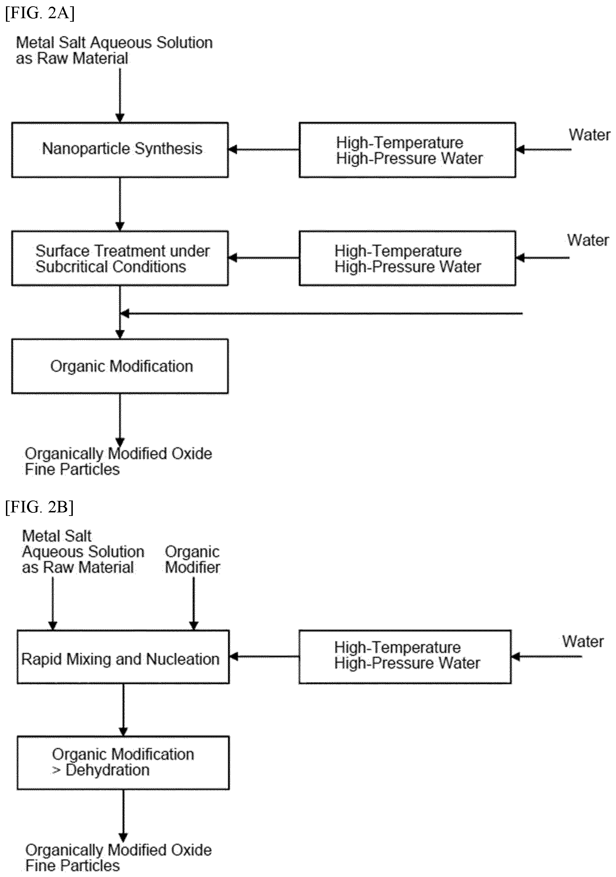

To perform organic modification on the surface of metal oxide nanoparticles, separating the OH group formation process on the surface and the organic modification reaction process with organic molecules becomes a method for resolving this contradiction. As in the invention according to the third aspect, the hydroxide or similar formation step can be performed in the first apparatus and the organic modification step in the second apparatus, physically separating them into a two-stage process; however, as in the invention according to the second aspect, a continuous process can be realized by setting a two-stage process in which, after the surface treatment process, the environment is subsequently maintained at a high temperature and the organic modifier is introduced. A schematic diagram of the invention according to the second aspect is shown in FIG. 2A.

However, organic modification in the reaction field of a supercritical, subcritical, or gas-phase aqueous solvent can also be set as a method to enable overcoming this difficulty in some cases. For example, as in the invention according to the fourth aspect, the raw material solution consists of a metal salt and an organic modifier. By mixing preheated supercritical water, a reaction field can be set in which hydrolysis and dehydration reactions occur to synthesize nanoparticles while allowing the dehydration reaction with the coexisting organic modifier to take place. After nucleation and the formation of aggregated clusters (non-classical nucleation) occur, it is sufficient to induce organic modification dehydration at a rate higher than the dehydration rate of oxide formation, and as a high concentration of the organic modifier can form a homogeneous phase in the subcritical or supercritical reaction field, the organic reaction can be controlled, making it possible. Due to the optimal temperature conditions for both of the above-mentioned reactions, the optimal reaction conditions are often near the critical point, in which the dielectric constant effect can be controlled as previously described. For the same reason, and by setting reaction conditions, even when using a solution of a metal salt or similar as the raw material, an optimal synthesis of organically modified oxide nanoparticles is possible, and through this control, the present invention makes it possible to obtain finer organically modified fine particles with higher-density organic modification. A schematic diagram of the invention according to the fourth aspect is shown in FIG. 2B.

Even if the hydroxyl groups on the surface are eliminated through dehydration reactions in the final stage, many hydroxyl groups are generated as products or on their surfaces as reaction precursors. By allowing the organic modifier to coexist in this reaction field, it becomes possible to conduct the reaction under conditions in which hydroxyl groups are present.

Thus, according to the invention of the first to fourth aspects, regardless of the type of oxide, organic modification can be uniformly performed over the entire surface of oxide particles using a common method, thereby obtaining organically modified oxide fine particles. This allows for the simple provision of organically modified oxide fine particles with further enhanced dispersibility in organic solvents. When organic molecule modification with hydrophilic groups is performed, dispersion in polar solvents, including water, becomes possible. Furthermore, dispersion into resins also becomes possible.

The invention according to a fifth aspect provides an organically modified oxide fine particle, wherein hydroxide and/or oxyhydroxide are formed on the surface of the oxide fine particle, and it is modified with organic molecules via the hydroxide layer and/or the oxyhydroxide layer.

The invention according to a sixth aspect provides an organically modified oxide fine particle, wherein the surface is modified with organic molecules and has OH groups on the surface.

The invention according to a seventh aspect provides an organically modified oxide fine particle according to the fifth or sixth aspect, wherein in Fourier transform infrared (FT-IR) spectroscopy, the ratio $PI_2/PI_1$ of the maximum peak intensity $PI_2$ in the closed interval with 3,000 cm$^{-1}$ and 3,700 cm$^{-1}$ as both ends, which is attributed to O-H, to the maximum peak intensity $PI_1$ in the closed interval with 2,800 cm$^{-1}$ and 3,000 cm$^{-1}$ as both ends, which is attributed to C-H, is 0.01 or more.

According to the invention of the fifth to seventh aspects, as the entire surface of the oxide fine particles is uniformly organically modified, by designing and selecting the modifying group to have high affinity with the solvent, higher dispersibility in solvents can be obtained regardless of the polarity of the solvent.

The invention according to an eighth aspect provides a fine particle according to the fifth or sixth aspect, wherein the coverage ratio of the molecules used for organic modification on the surface is 1% or more relative to the surface area of the fine particle.

According to the invention of the eighth aspect, as the coverage ratio of the molecules used for organic modification on the surface is 1% or more, it is possible to provide organically modified oxide fine particles in which the state of the exposed surface of the fine particles is more precisely controlled.

Effect of the Invention

According to the present invention, by enabling a uniform organic modification across the entire surface of oxide particles using a common method, regardless of the type of oxide particles, it is possible to simply provide organically modified oxide fine particles with further enhanced dispersibility in solvents.

Brief Description of Drawings

[FIG. 1] FIG. 1 is a schematic diagram showing the mechanism of the modification reaction in the invention according to the present embodiment.
[FIG. 2A] FIG. 2A is an example of a production method according to the present embodiment.
[FIG. 2B] FIG. 2B is another example of the production method according to the present embodiment.
[FIG. 3] FIG. 3 shows the infared spectrum of the organically modified oxide fine particles obtained in Examples 1-1 and 1-2.
[FIG. 4] FIG. 4 shows the infared spectrum of the organically modified oxide fine particles obtained in Examples 1-3 and 1-4.
[FIG. 5] FIG. 5 is a schematic diagram of the continuous production apparatus used in Test Example 2.
[FIG. 6] FIG. 6 shows the infared spectrum of the organically modified oxide fine particles obtained in Example 2.

Modes for Carrying Out the Invention

Hereinafter, specific embodiments of the present invention will be described in detail, but the present invention is not limited to the following embodiments and can be implemented with appropriate modifications within the scope of the objectives of the present invention.

<Method for Producing Organically Modified Oxide Fine Particles>

The method described in the present embodiment includes a hydroxide or similar formation step of forming hydroxide and/or oxyhydroxide on the surface of oxide particles, and an organic modification step of organically modifying raw material particles, on which hydroxide or the like has been formed, in a reaction field such as a supercritical environment.

A two-stage process may be configured by physically separating a first apparatus that performs the hydroxide or similar formation step and a second apparatus that performs the organic modification step, with each step being carried out in a separate apparatus; however, as shown in FIG. 2A, continuous processing can be enabled by configuring a two-stage process in which, after the surface treatment process, the environment is subsequently maintained at a high temperature and the organic modifier is introduced.

However, organic modification in a reaction field of a supercritical, subcritical, or gas-phase aqueous solvent can also be set as a method to enable overcoming this difficulty. For example, as shown in FIG. 2B, the raw material solution consists of a metal salt and an organic modifier. By mixing preheated supercritical water, a reaction field can be set where hydrolysis and dehydration reactions occur to synthesize nanoparticles, while allowing the dehydration reaction with the coexisting organic modifier to take place. After nucleation and the formation of aggregated clusters (non-classical nucleation) occur, it is sufficient to induce organic modification dehydration at a rate higher than the dehydration rate of oxide formation, and as a high concentration of the organic modifier can form a homogeneous phase in the subcritical or supercritical reaction field, the organic reaction can be controlled, making it possible.

{Hydroxide or Similar Formation Step}

The hydroxide or similar formation step is a step of forming hydroxide and/or oxyhydroxide on the surface of oxide particles.

[Raw Materials]

The raw material may be an oxide or a metal salt.

Among oxides, inorganic oxides include, for example, metal oxides. Specific examples of metal oxides include aluminum oxide, zirconium oxide, titanium oxide, zinc oxide, tin oxide, antimony oxide, silicon oxide, and cerium oxide. The oxide may be a single type or two or more types.

When the oxide is an inorganic oxide, the type of inorganic component is not particularly limited. According to the method described in the present embodiment, from the viewpoint of not impairing the physical properties of the obtained fine particles, the inorganic component is preferably a metal, a metalloid, or an alloy thereof.

When the raw material is a metal salt, as shown in FIG. 2A, the raw material slurry is heated in an electric furnace, causing the metal salt to undergo hydrolysis and generate hydroxide, and further dehydration occurs at a high temperature to produce a metal oxide. After the formation of metal (hydr)oxide, by performing the steps described later, when the raw material is a metal salt, it is possible to form an optimal hydroxide and/or oxyhydroxide on the surface of the oxide particles, even if the raw material itself is not an oxide.

Moreover, as shown in FIG. 2B, the raw material solution consists of a metal salt and an organic modifier. By mixing preheated supercritical water, a reaction field can be set where hydrolysis and dehydration reactions occur to synthesize nanoparticles while allowing the dehydration reaction with the coexisting organic modifier to take place. After nucleation and the formation of aggregated clusters (non-classical nucleation) occur, it is sufficient to induce organic modification dehydration at a rate higher than the dehydration rate of oxide formation, and as a high concentration of the organic modifier can form a homogeneous phase in the subcritical or supercritical reaction field, the organic reaction can be controlled, making it possible.

[Formation of Hydroxide or Oxyhydroxide]

(Formation of Hydroxide)

The formation of hydroxide is performed by subjecting the oxide to hydrothermal treatment. As the raw material is exposed to high temperatures, when the raw material is an inorganic oxide, the inorganic component among the inorganic oxides does not become gaseous and remains as an inorganic hydroxide. Accordingly, hydroxide (hydroxide layer) can uniformly form not only at the molecular terminals of the raw material but also over the entire surface.

The hydrothermal treatment is preferably performed under subcritical conditions. Furthermore, by performing hydrothermal treatment under alkaline conditions using potassium hydroxide, calcium hydroxide, or the like, hydroxide (hydroxide layer) can form even at lower temperatures. It should be noted that even in an acidic environment such as nitric acid, sulfuric acid, or hydrochloric acid, hydroxide can be formed as oxide particles dissolve.

(Formation of Oxyhydroxide)

The formation of oxyhydroxide is performed by high-temperature oxidation in a state where a small amount of water vapor is present. As the raw material is exposed to high temperatures, when the raw material is an inorganic oxide, the inorganic component among the inorganic oxides does not become gaseous and remains as an inorganic oxyhydroxide. Accordingly, oxyhydroxide (oxyhydroxide layer) can uniformly form not only at the molecular terminals of the raw material particles but also over the entire surface.

Under relatively low-temperature hydrothermal conditions, including subcritical conditions, oxyhydroxide may also form in water based on equilibrium principles. Boehmite ($AlOOH$) is an example of this.

Even in the formation of oxyhydroxide, by performing treatment under alkaline conditions using potassium hydroxide, calcium hydroxide, or the like, hydroxide (hydroxide layer) can form even at lower temperatures. It should be noted that even in an acidic environment such as nitric acid, sulfuric acid, or hydrochloric acid, hydroxide can form as oxide particles dissolve.

{Organic Modification Step}

The organic modification step is a step of organically modifying a raw material in which (oxy)hydroxide or similar has formed on the surface and has been particleized (hereinafter also referred to as "raw material particles") in the reaction field of a supercritical, subcritical, or gas-phase aqueous solvent to obtain organically modified inorganic fine particles. Through this method, an extremely high degree of supersaturation can be achieved compared with conventional liquid-phase and gas-phase methods, thereby enabling the refinement of particles that is, making the specific surface area per unit volume (weight) extremely large.

(Reaction Field)

When organically modifying the surface of raw material particles, there is no particular limitation as long as the apparatus can achieve high-temperature and high-pressure conditions, and an apparatus widely known to those skilled in the art in this field can be selected and used, and for example, both batch-type and flow-type apparatuses can be used. Representative reactors include those shown in FIG. 2; an appropriate reaction apparatus can be configured as necessary.

The water used in the reaction in the present invention may be supercritical water (SCW) or water in a pre-critical state. Pre-critical water includes water in a state referred to as gaseous water or steam (or vapor). Furthermore, pre-critical water includes water in a state referred to as subcritical water. When the water is pre-critical water, it is preferable that it be in a liquid state (liquid phase) or include a liquid phase as the main phase. Under such hydrothermal conditions, it has the ability to form a single phase with relatively heavy hydrocarbons, and near the critical point, the solvent effect (i.e., the effect on the reaction equilibrium and reaction rate due to the dielectric constant and the hydration structure formation) can be significantly controlled by temperature and pressure.

The "hydrothermal conditions" in the present invention are defined as water coexistence conditions with the following reaction temperature. As described above, "hydrothermal conditions" include conditions in which water in a state referred to as gaseous water or steam (or vapor) coexists.

Although not particularly limited, the lower limit of the reaction temperature is preferably 150°C or higher, more preferably 200°C or higher, further preferably 250°C or higher, and particularly preferably 300°C or higher.

Furthermore, the upper limit of the reaction temperature is preferably 1,000°C or lower, more preferably 600°C or lower, further preferably 500°C or lower, and particularly preferably 450°C or lower.

The reaction pressure of the present invention is not particularly limited, but it is at least atmospheric pressure and may be 50 MPa or lower. More preferably, the reaction pressure may be 5 MPa or higher and 40 MPa or lower.

Furthermore, the reaction time of the present invention is not particularly limited, but for example, it may be 1 minute or longer and 48 hours or shorter, more generally 5 minutes or longer and 24 hours or shorter, and more typically 10 minutes or longer and 12 hours or shorter.

(Reaction Mechanism)

In the present embodiment, hydroxyl groups exist on the surface of the raw material particles. For example, when the raw material particles are metal oxides, the presence of hydroxyl groups on the surface of the raw material particles is due to the following equilibrium reaction:

$$MO + H_2O = M(OH) \quad (1)$$

In general, this reaction is exothermic, and the equilibrium shifts to the left at higher temperatures. Furthermore, the reaction caused by the surface modifier used is a dehydration reaction and is expressed as follows.

The reaction caused by the surface modifier is a dehydration reaction and is expressed as follows and. In general, organic modification reactions are endothermic, and the equilibrium shifts to the right at higher temperatures.

The leftward reaction (reverse reaction) is a well-known reaction in the hydrolysis of alkoxides and similar, and it is a reaction that easily occurs even at around room temperature upon the addition of water. As this reverse reaction is generally exothermic, it is suppressed at higher temperatures, thus making the rightward reaction (dehydration) more favorable.

In the organic modification reaction, the rightward reaction (dehydration) results in a product with lower polarity compared with the reactant system; thus, the stability of the product in water is more favorable as the polarity of the solvent decreases. The dielectric constant of water decreases at higher temperatures, dropping to 15 or lower below 350°C, and it rapidly decreases to approximately 1 to 10, especially near or above the critical point. As a result, the dehydration reaction accelerates even more than the above-mentioned temperature effect.

$$M(OH) + ROH = M(OR) + H_2O = M \cdot R + 2H_2O$$

$$M(OH) + RCOOH = M(OCO\text{-}R) + H_2O = MR + H_2O + CO_2$$

$$M(OH) + RCHO = M(OH)CR + H_2O = MC=R + 2H_2O, MCR + 2H_2O, MR + H_2 + CO_2$$

$$M(OH) + RSH = MSR + H_2O \text{ (Reduction)}$$

(These equations are referred to as (2).)

It is known that the attack of hydroxyl groups by amines proceeds at around room temperature in the presence of strong acids or through substitution by Cl, but an exchange with OH occurs in high-temperature and high-pressure water. Regarding organic substances, it has been confirmed that the amination of hexanol proceeds with carboxylic acid as a catalyst between hexanamide and hexanol, and it is inferred that a similar reaction is takes place. Part of the reaction mechanism of the present method is schematically shown in FIG. 1 as an example.

In the case of thiols, it has been reported that reduction may occur in the reaction field, and it is inferred that partial reduction occurs on the surface of metal oxides, leading to thiol addition reactions.

As described above, the temperature dependence of the hydroxyl group formation on the surface of the metal oxide in Equation (1) and the organic modification reaction in Equation (2) are in opposite directions. Therefore, particularly when the reaction in Equation (1) is on the left side (i.e., on the dehydration side), setting reaction conditions such as the coexistence of acid, is extremely important for inducing the modification reaction, and it may be difficult in some cases.

Conversely, organic modification in the reaction field of a supercritical, subcritical, or gas-phase aqueous solvent is a method that enables this.

In general, the fine particles generated using a hydrolysis reaction are hydroxides, and the equilibrium shifts toward the oxide side at higher temperatures. The molecular arrangement state shifts from a random amorphous state at higher temperatures to an ordered crystalline state. Using the technology described in the present embodiment, it is possible to obtain fine particles with high crystallinity that are organically modified.

In fine particles, in terms of particle size, surface energy and external energies, such as gravity and electric fields, counteract each other that is, when separating particles using centrifugal force, gravitational sedimentation, or electrophoresis, or performing dispersion operations, dispersion does not occur if the particle size becomes 100 nm or less unless a significant external force is applied. When the particle size is 50 nm or less, the influence of surface energy becomes even greater, and unless the surface properties are controlled or the physical properties of the solvent are adjusted, it becomes extremely difficult to achieve dispersion using only external energy. The technology of the present embodiment can solve this problem.

Specifically, when the particle size is 10 nm or less, quantum state overlap disappears, and the influence of the electronic state on the surface significantly affects the bulk properties. As a result, it has been found that properties completely different from those of bulk particles are obtained that is, the quantum size effect (Kubo effect) appears. For particles with a size of approximately 10 nm or less, they can particularly be considered as entirely different substances, but the technology described in this embodiment allows for the appropriate organic modification of such fine particles.

(Method for Setting Conditions)

((Reaction Equilibrium))

While the reaction conditions under which organic modification occurs vary depending on the metal species and the modifier, they can be summarized as follows.

The reaction proceeds when the equilibrium of Equation (1) is on the right side and the equilibrium of Equation (2) is on the right side. As the equilibrium of each equation varies depending on the metal species and the modifier, the optimal reaction conditions also differ. The equilibrium of Equation (2) shifts to the right when the temperature increases, and particularly at 350°C or higher, it shifts rapidly toward the forward direction, whereas the equilibrium of Equation (1) shifts to the left due to the temperature effect. Refer to the DB of Equations (1) and (2) for reaction conditions. In general, the solubilization and water addition in Equation (1) are preferable under subcritical conditions, while the dehydration reaction in Equation (2) is preferable at or above the critical point, with supercritical conditions being preferred; thus, when these reactions are conducted simultaneously, conditions near the critical point are often selected. Particularly at or above the critical point, this allows the reaction to proceed because the organic modifier required for the organic modification reaction in Equation (2) can form a homogeneous phase even at an extremely high concentration.

As the functional groups on the surface of the metal oxide can be set as OH using coexisting bases or acids, the dehydration reaction with the modifier can be induced under such conditions. In this case, as the dehydration reaction is more likely to occur in the presence of acid, the reaction can be promoted by coexisting a small amount of acid at a high temperature.

((Phase Equilibrium))

As alcohols, aldehydes, carboxylic acids, and amines of relatively short-chain hydrocarbons are soluble in water, for example, surface modification of metal oxides using methanol is possible. However, in the case of longer-chain hydrocarbons, they phase-separate from the aqueous phase; thus, even if the above reaction equilibrium is in the forward direction, the metal oxide present in the aqueous phase and the organic modifier may not actually react. That is, the introduction of lipophilic groups is relatively easy, but when targeting hydrocarbons with a chain length of C3 or longer, it is necessary to consider phase behavior.

The phase behavior between hydrocarbons and water has already been reported and can be referenced. In general, a homogeneous phase can be formed at any ratio at or above the critical trajectory of the gas-liquid phase; thus, favorable reaction conditions can be established by setting such temperature and pressure conditions.

Furthermore, if a lower optimal reaction temperature is desired, it is also possible to coexist with a third component to form a homogeneous phase of water and organic matter. For example, it is known that the coexistence region of hexanol and water can form a homogeneous phase even at lower temperatures by coexisting with ethanol or ethylene glycol, which can form a homogeneous phase with water even at low temperatures. By utilizing this, a reaction between metal oxides and organic substances can be conducted. However, in this case, selecting the third component is important to prevent a surface modification reaction caused by the third component.

Thus, for the first time, long-chain organic modification in water becomes possible through this method.

[Organic Modification: In Situ Surface Modification during Hydrothermal Synthesis]

As described above, the temperature dependence of the hydroxyl group formation on the surface of metal oxides in Equation (1) and the organic modification reaction in Equation (2) and subsequent reactions are in opposite directions. Therefore, particularly when the equilibrium of Equation (1) shifts to the left (i.e., toward dehydration) it is extremely important to optimally set the reaction conditions, such as the conditions for forming a homogeneous phase or the coexistence of acids, to induce the modification reaction, but this may be difficult in some cases.

By contrast, hydrothermal in situ surface modification is a method that makes this possible.

Hydrothermal synthesis proceeds via the following reaction pathway:

$$Al(NO3)3 + H2O = Al(OH)3 + 3HNO3$$

$$nAl(OH)3 = nAlO(OH) + nH2O$$

$$nAlO(OH) = n/2\ Al2O3 + n/2\ H2O$$

Following hydrolysis, dehydration ((oxyhydr)oxidation) occurs, but if the rate of the organic modification dehydration reaction can be made faster than this, it can be achieved. The organic modifier concentration must be ultra-high to accomplish this.

On the other hand, under subcritical conditions, organic molecules and water form a homogeneous phase at any ratio. By setting such reaction conditions, the in situ synthesis of organic-modified metal oxide nanoparticles becomes possible.

This reaction pathway proceeds similarly when other metal species, as well as sulfates and hydrochlorides, are used. Furthermore, when conducted using high-temperature, high-pressure water as the reaction field, hydrothermal synthesis enables the formation of finer particles, allowing in situ surface modification techniques to yield even finer organic-modified particles. By adjusting the temperature and pressure, the particle size can also be controlled.

As shown here, even if the hydroxyl groups are ultimately removed from the surface due to dehydration reactions, a large number of hydroxyl groups are still generated in the product or on its surface as precursors to the reaction. If an organic modifier coexists in this reaction field, the reaction can proceed under conditions where hydroxyl groups are present. Additionally, as acids, which also function as catalysts to promote the dehydration reaction, coexist in the reaction field, the modification reaction is accelerated. As a result, it becomes possible to perform surface modification that could not be achieved for oxides.

The technology described in this embodiment is not based on achieving a high-temperature environment and equilibrium toward oxides, such as synthesizing a precursor once and then synthesizing metal oxides or metal hydroxides through hydrolysis or other methods, and the surface of fine particles can be organically modified without using radical polymerization substrates or other substances sensitive to oxidizing agents, temperature, and light, among others. Therefore, it is also possible to organically modify metal particles and particles with different oxidation-reduction states.

In this embodiment, a phase state in which water and organic substances form a homogeneous phase is utilized, and at the same time, an attempt is made to synthesize inorganic-organic composite materials while synthesizing highly crystalline oxide fine particles with a size of 1 to 50 nm or less and modifying their surfaces with organic molecules.

By allowing organic molecules to cap while reacting in a reaction field such as a supercritical environment, further miniaturization of the oxide fine particles can be achieved. Moreover, by organically modifying the surface of oxide fine particles with a hydrophilic surface with hydrophobic groups, such as hydrocarbon organic groups, particles that are difficult to recover or otherwise manipulate in aqueous media can be easily and reliably transferred to the organic medium side for separation and recovery. Through this organic modification, fine particles with controlled exposed crystal surfaces can also be recovered without altering their shape. As the production of photocatalyst devices is carried out by a coating-type process, it becomes possible to achieve high affinity with solvents, disperse fine particles at high concentrations, and exhibit low viscosity.

The organic modifier is not particularly limited as long as it can strongly bond hydrocarbons to the surface of the fine particles and can be selected from organic substances widely known in fields where the application of fine particles is expected, including the fields of organic chemistry, inorganic materials, and polymer chemistry. Examples of such organic modifiers include those that allow the formation of strong bonds such as ether bonds, ester bonds, bonds mediated by N atoms, bonds mediated by S atoms, metal-C- bonds, metal-C= bonds, and metal-(C=O)- bonds. As for the hydrocarbons, the number of carbon atoms is not particularly limited, but it is preferably 18 or less. When the hydrophobic group is short-chain, a moderately phase-separated structure is formed when fine particles are added to a binder constituting a positive electrode composite material, enabling the smooth transfer of lithium ions and electrons, thereby achieving higher battery capacity characteristics and suppressing degradation associated with charge and discharge cycles.

Among them, considering that the functional group is an aromatic group and the linking hydrocarbon is approximately two, the number of carbon atoms constituting the hydrophobic group is more preferably 30 or less.

The organic modifier may be a linear chain, a branched chain, or a cyclic structure. Additionally, the organic modifier may be substituted or unsubstituted. The substituent may be selected from functional groups widely known in the fields of organic chemistry, inorganic materials, and polymer chemistry, and one or more substituents may be present; in the case of multiple substituents, they may be identical or different from each other.

Examples of organic modifiers include alcohols, aldehydes, ketones, carboxylic acids, esters, amines, thiols, amides, oximes, phosgene, enamines, amino acids, peptides, and saccharides.

Representative modifiers include, for example, pentanol, pentanal, pentanoic acid, pentanamide, pentanethiol, hexanol, hexanal, hexanoic acid, hexanamide, hexanethiol, heptanol, heptanal, heptanoic acid, heptanamide, heptanethiol, octanol, octanal, octanoic acid, octanamide, octanethiol, decanol, decanal, decanoic acid, decanamide, and decanethiol.

The hydrocarbon group mentioned above may be a substituted or unsubstituted straight-chain or branched-chain alkyl group, a substituted or unsubstituted cyclic alkyl group, a substituted or unsubstituted aryl group, a substituted or unsubstituted aralkyl group, or a substituted or unsubstituted saturated or unsaturated heterocyclic group. Examples of substituents include carboxyl groups, cyano groups, nitro groups, halogens, ester groups, amide groups, ketone groups, formyl groups, ether groups, hydroxyl groups, amino groups, sulfonyl groups, -O-, -NH-, and -S-.

(Continuous Production)

The organic modification step preferably includes a process in which a continuous reactor is used to synthesize fine particles containing constituent chemical elements in a ratio different from the stoichiometric ratio and in the presence of an amount of organic modifier exceeding the stoichiometric amount for organic modification of the particle surface.

When conducting continuous production, the Reynolds number of the fluid in the reaction field is preferably 3,000 or more, more preferably 4,000 or more, and even more preferably 5,000 or more. This enables the mixing rate to be higher than the reaction rate-that is, to conduct the reaction under the reaction rate limitation, and allow monomers to be dissolved in the aqueous solvent in a supersaturated state, thereby reducing the average particle size of the obtained fine particles and further narrowing the particle size distribution.

In general, according to the classical homogeneous nucleation and growth mechanism, increasing the concentration increases the degree of supersaturation, making fine particle formation more likely. However, according to non-classical nucleation theory, after the formation of initial droplet nuclei, the growth of droplet nuclei occurs through their coalescence and aggregation; thus, the particle size increases with increasing concentration. This mechanism can be utilized as a method to produce single crystals while increasing their size in a short time. If the coalescence of droplet nuclei or immature microcrystals occurs at a rate faster than the crystallization rate, fine particles with high single crystallinity can be recovered. As the concentration is high, productivity also improves. To achieve this, the forming a uniform mixing field is effective, and in this sense, a Reynolds number of 3,000 or more is preferable. Furthermore, by controlling the reaction time to 0.1 seconds or less, nanoparticles can be recovered while suppressing the collision of initial nuclei.

[Recovery of Surface Organically Modified Fine Particles]

By organically modifying the surface of fine particles having a hydrophilic surface with hydrophobic groups such as hydrocarbon organic groups, particles that are difficult to recover or perform other operations on from aqueous media can be easily and reliably transferred to the organic medium side for separation and recovery. Furthermore, through this organic modification, fine particles with controlled exposed crystal surfaces can be recovered without altering their shape.

The method described in this embodiment preferably involves freeze-drying or supercritical treatment after organically modifying the surface of metal oxides or similar and then recovering the organically modified carbon material. When organic modification is performed using subcritical water or supercritical water, the carbon material after organic modification becomes hydrophobized and thus automatically phase-separates from water. Therefore, it can be effectively recovered by adding a small amount of organic solvent. However, when an organic solvent is used during the organic modification process, the solvent must be dried and removed, and during the drying process, capillary forces act, causing the carbon material to aggregate. Therefore, by performing freeze-drying or supercritical treatment, these capillary forces can be suppressed to prevent aggregation, enabling high-efficiency recovery of organically modified carbon materials. In particular, by performing supercritical carbon dioxide drying, complete recovery of the organic solvent becomes possible, allowing its reuse. Additionally, separation from unused modifying agents also becomes possible.

{Single-step Process Option}

The hydroxide or similar formation step and the organic modification step may be a two-step process in which each step is performed in a separate reaction apparatus, or a single-step process in which both steps are performed in the same reaction apparatus.

First, the raw material (oxide or metal salt) is placed into the reaction apparatus and heated gradually at a low temperature (e.g., a subcritical state or high-temperature oxidation in the presence of a small amount of water vapor). During the heating process, treatment corresponding to the hydroxide or similar formation step takes place. The heating time varies depending on the solubility of the metal oxide; for highly soluble particles, 5 seconds may be sufficient, whereas for metal oxides with particularly low solubility and high crystallinity, it is preferably 1 minute or more, more preferably 5 minutes or more, and even more preferably 7 minutes or more.

Subsequently, an organic modifying agent is supplied into the reaction apparatus, and the oxide particles, on the surface of which hydroxide and/or oxyhydroxide has formed are organically modified in a reaction field of a water-based solvent in a supercritical, subcritical, or gas-phase state. This organic modification corresponds to the organic modification step.

If the organic modifying agent is unlikely to decompose during the heating process of the oxide, the organic modifying agent may be introduced from the hydroxide or similar formation step. Even in this case, as the hydroxidation and/or oxyhydroxidation of the oxide takes place first, followed by the organic modification of the hydroxidized and/or oxyhydroxidized oxide particles, even if both steps are performed in the same reaction apparatus as a single-stage process, this means that both the hydroxide or similar formation step and the organic modification step take place in the reaction apparatus.

<Organically Modified Oxide Fine Particles>

The organically modified oxide fine particles described in this embodiment have hydroxide and/or oxyhydroxide formed on their surfaces and are modified with organic molecules via the hydroxide layer and/or the oxyhydroxide layer. The organically modified oxide fine particles also have a surface modified with organic molecules and have OH groups on their surfaces.

{C-H Peak}

The organically modified oxide fine particles described in this embodiment exhibit an absorption peak in the range of 2,800-3,000 $cm^{-1}$, as shown in Fourier transform infrared spectroscopy (FT-IR), due to C-H.

The maximum peak intensity $PI_1$ in the closed interval between 2,800 $cm^{-1}$ and 3,000 $cm^{-1}$ serves as a measure of the degree of organic modification; the higher it is, the more preferable it becomes. Although the peak intensity depends on the sample concentration, when expressed in the transmittance relative to the maximum absorption peak intensity $PI_1$, it is preferable that the transmittance of the absorption peak in the range of 2,800-3,000 $cm^{-1}$ is 80% or lower, more preferably 70% or lower, even more preferably 60% or lower, still more preferably 50% or lower, particularly preferably 40% or lower, and most preferably 30% or lower.

There is no particular limitation on the lower limit of the transmittance of the absorption peak in the range of 2,800-3,000 cm$^{-1}$.

{O-H Peak}

The organically modified oxide fine particles described in this embodiment exhibit an absorption peak in the range of 3,000-3,700 cm$^{-1}$, as shown in Fourier transform infrared spectroscopy (FT-IR), due to O-H.

The maximum peak intensity PI2 in the closed interval between 3,000 cm$^{-1}$ and 3,700 cm$^{-1}$ serves as a measure indicating the presence of binding sites for organic modification groups on the surface of the oxide particles; the stronger this peak intensity, the greater the number of binding sites. Although the peak intensity itself depends on the sample concentration, considering the previously mentioned C-H peak as a reference, it is preferable that the transmittance of the absorption peak in the range of 3,000-3,700 cm$^{-1}$ is 80% or lower; and more preferably 70% or lower.

Conversely, if the intensity of the absorption peak in the range of 3,000-3,700 cm$^{-1}$ is too strong, it indicates that a sufficient amount of organic modifier could not bind. Therefore, in determining the degree of organic modification, the intensity of the absorption peak in the range of 3,000-3,700 cm$^{-1}$ should not be used alone as a criterion but should be evaluated together with the C-H peak.

{Ratio $PI_2/PI_1$ of the Maximum Peak Intensity $PI_2$ of O-H to the Maximum Peak Intensity $PI_1$ of C-H}

The organically modified oxide fine particles described in this embodiment have, in Fourier transform infrared spectroscopy (FT-IR), a ratio $PI_2/PI_1$ of the maximum peak intensity $PI_2$ in the closed interval between 3,000 cm$^{-1}$ and 3,700 cm$^{-1}$, which is attributed to O-H, to the maximum peak intensity $PI_1$ in the closed interval between 2,800 cm$^{-1}$ and 3,000 cm$^{-1}$, which is attributed to C-H, of 0.01 or more, preferably 0.05 or more, more preferably 0.1 or more, and even more preferably 0.2 or more.

Furthermore, the upper limit of the ratio $PI_2/PI_1$ is preferably 1 or less, more preferably 0.8 or less, even more preferably 0.6 or less, further preferably 0.4 or less, and particularly preferably 0.3 or less.

The ratio $PI_2/PI_1$ serves as a measure of whether the surface of the oxide fine particles is uniformly organically modified, and when this ratio falls within the appropriate range, it suggests that the coverage ratio of the organic modification molecules on the surface is 1% or more relative to the surface area of the fine particles. Additionally, when this ratio is within the appropriate range, a higher dispersibility of the fine particles in solvents is expected.

The coverage ratio of the organic modification molecules on the surface is determined using thermogravimetric analysis, based on the weight loss ratio before and after the organic modification and functionalization.

{Applications}

The organically modified inorganic fine particles described in this embodiment function as particles adapted to user needs. For example, they function as materials that enable high functionality, high performance, high density, and advanced precision, such as industrial and engineering materials, including nanostructure modifiers for ceramics, optical functional coating materials, electromagnetic shielding materials, secondary battery materials, fluorescent materials, electronic component materials, magnetic recording materials, and abrasive materials, as well as high-performance pharmaceutical and cosmetic materials.

Among these, organically modified inorganic fine particles are useful as high-concentration barium titanate dispersion resins for semiconductor packaging, nanoparticle dispersion inks for inkjet applications, battery materials, catalyst materials, and lubricants, and they can be prepared as follows:

Semiconductor and other electronic components require packaging with high-dielectric constant resins to eliminate external electrical interference. To achieve this, barium titanate particle-dispersed thermosetting resins are used. In high-concentration barium titanate dispersion resins for semiconductor packaging and similar applications, achieving high-concentration dispersion of barium titanate particles is a requirement. Although it is possible to disperse barium titanate into resins using surfactants, this approach causes dielectric loss at the interface. By utilizing the production technology of the organically modified fine particles of the present invention, it becomes possible to synthesize particles with strongly bound surface modifications; and, ultimately, to introduce monomers identical to those of resin, thereby synthesizing a material in which the resin and inorganic material are integrated as a single entity.

Nanoparticles exhibit excellent physical properties such as coloration, excellent color development, and durability, making them suitable for use in high-tech device inks, such as nanoparticle-dispersed inks for inkjet applications. Inkjet printers using nanoparticle-dispersed inks are expected to be used for wiring and circuit pattern fabrication via inkjet printing. However, for such applications, it is necessary to synthesize nanoparticles suitable for this purpose and ensure their high-concentration dispersion in solvents. The manufacturing technology of the organically modified fine particles of the present invention enables the synthesis of particles containing polymers identical to those of the ink solvent.

Electrode materials for battery applications, such as lithium-ion batteries and capacitor materials, are prepared by mixing them with carbon materials to form product materials. It is essential that the battery materials are sufficiently dispersed with carbon and solvents. Generally, dispersant-based treatment is required, but the manufacturing technology of the organically modified fine particles of the present invention enables the synthesis of materials that can achieve homogeneous dispersion in solvents without the use of dispersants.

Supported metal catalysts are activated through charge transfer resulting from the interaction between the electronic orbitals of the metal and the oxide catalyst. By applying the manufacturing technology of the organically modified fine particles of the present invention, which allows different materials to be mixed on a nanometer scale, it becomes possible to prepare catalysts with a high density of active sites where the metal and oxide are in contact, thereby yielding excellent catalytic material.

Lubricants are used to reduce friction between solid surfaces, and incorporating nanoparticles into lubricants is expected to enable them to function as nano-bearings. Specifically, they convert shear force into the rotational motion energy of the bearings, preventing the transmission of shear force to the opposing surface. Conventionally, organic polymers have been used as lubricants, but the manufacturing technology of the organically modified fine particles of the present invention makes it possible to disperse oxide nanoparticles with a robust structure into lubricants.

{Average Primary Particle Diameter}

Although the upper limit of the average primary particle diameter of the fine particles is not particularly restricted, for example, it is preferably 10 $\mu$m or less, more preferably 1 $\mu$m or less, even more preferably 100 nm or less, still more preferably 50 nm or less, and particularly preferably 30 nm or less.

In the case of in situ synthesis, it is also possible to synthesize even smaller organically modified nanoparticles, and sizes of 10 nm or less, more preferably 5 nm or less, and even more preferably 3 nm or less are preferred.

The lower limit of the average primary particle diameter of the fine particles is also not particularly restricted. Generally, fine particles undergo secondary particle formation through press-molding, and the secondary particles are used either in packed bed reactors for cyclic operations or as circulating fluidized bed particles.

In the present embodiment, the average primary particle diameter of the fine particles is determined by capturing particle images using TEM (Transmission Electron Microscopy) and analyzing the TEM images with image analysis and measurement software. In cases where the particle size distribution is broad, special attention must be given to whether the particles within the field of view are representative of the entire particle population.

{Specific Surface Area}

When supplying fine particles as raw materials for the synthesis of organically modified fine particles, the specific surface area of the fine particles may be 5 $m^2$/g or more and 1000 $m^2$/g or less from the perspective of reaction activity, and generally, it may be 10 $m^2$/g or more and 500 $m^2$/g or less, typically 20 $m^2$/g or more and 400 $m^2$/g or less, and preferably 30 $m^2$/g or more and 300 $m^2$/g or less.

[Examples]

The present invention will be specifically described below with reference to examples; however, the invention is not limited thereto.

<Test Example 1> Batch Production of Organically Modified Yttria-Supported $ZrO_2$ Fine Particles

{Example 1-1}

A solution containing 10 mL of an aqueous solution of $ZrO(NO_3)_2 \cdot 2H_2O$ (0.388 mol/L) and $Y(NO_3)_3 \cdot 6H_2O$ (0.024 mol/L) was mixed with 4.5 mL of 2-ethylhexanoic acid and stirred overnight at 50°C. Subsequently, 0.5 mL of the organic phase from the stirred solution was placed in a 5 cc tube bomb reactor together with 1.5 mL of pure water and 80 $\mu$L of 5 mol/L potassium hydroxide and then inserted into a preheated furnace set to 340°C for 10 minutes. The reaction was terminated by immersing the reaction tube in cold water. The resulting product was extracted using water and benzene, and after recovering the benzene layer, the product was precipitated from the recovered solution using ethanol and then washed.

{Example 1-2}

Except for the use of 4.5 mL of octanoic acid instead of 4.5 mL of 2-ethylhexanoic acid, the precipitate was obtained using the same method as in Example 1-1.

{Example 1-3}

A mixture of 150.6 mg of $ZrO(NO_3)_2 \cdot 2H_2O$, 13.8 mg of $Y(NO_3)_3 \cdot 6H_2O$, 169.8 mg of KOH, and 0.536 mL of ethylhexanoic acid was placed in a tube bomb reactor along with 3 mL of pure water, and the reaction tube was inserted into a preheated furnace set to 300°C for 10 minutes. The reaction was terminated by immersing the reaction tube in cold water. The resulting product was extracted using water, benzene, and cyclohexane, and after recovering the cyclohexane layer, the product was precipitated from the recovered solution using ethanol and then washed.

{Example 1-4}

Except for the use of 0.536 mL of octanoic acid instead of 0.536 mL of ethylhexanoic acid, the precipitate was obtained using the same method as in Example 1-3.

{Evaluation} Infrared Spectrum

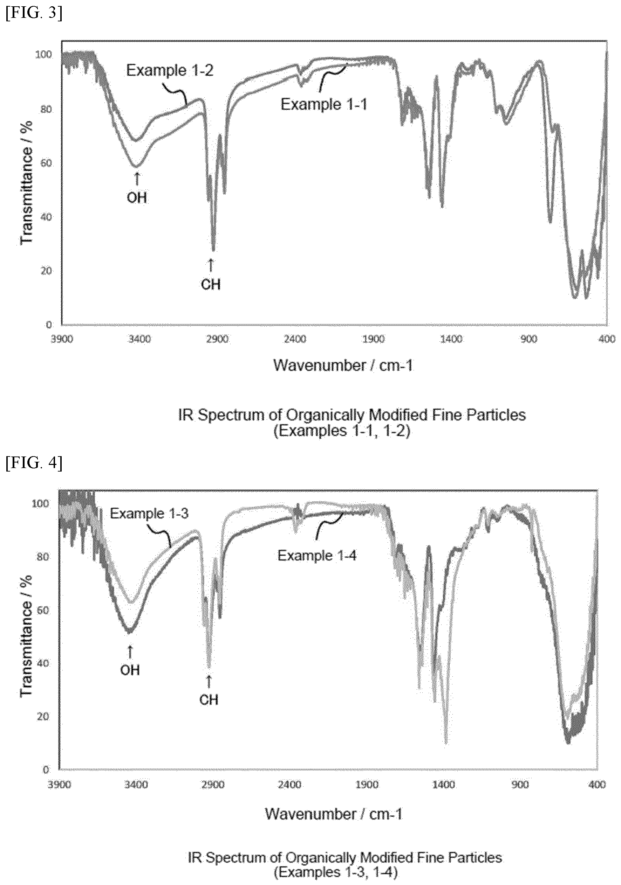

The infrared spectra (IR spectra) of the precipitates obtained in Examples 1-1 to 1-4 were measured. FIG. 3 shows the IR spectra of the precipitates obtained in Examples 1-1 and 1-2, while FIG. 4 shows the IR spectra of the precipitates obtained in Examples 1-3 and 1-4. In all cases of Examples 1-1 to 1-4, the peaks attributed to the organic modifier (absorption peak at 2,800-3,000 $cm^{-1}$ due to C-H) were confirmed. As shown in Table 1, the transmittance of the peak was 50% or less in all cases.
Furthermore, in all cases of Examples 1-1 to 1-4, the peaks attributed to hydroxides and/or oxyhydroxides (absorption peak at 3,000-3,700 $cm^{-1}$ due to O-H) were confirmed. As shown in Table 1, the transmittance of the peak was 50% or more and 70% or less in all cases.
The ratio $PI_2/PI_1$, of the maximum peak intensity $PI_2$ in the closed interval with 3,000 $cm^{-1}$ and 3,700 $cm^{-1}$ as both ends, which is attributed to O-H, to the maximum peak intensity $PI_1$ in the closed interval with 2,800 $cm^{-1}$ and 3,000 $cm^{-1}$ as both ends, which is attributed to C-H, ranged from 0.36 to 0.77.

[Table 1]

| | Transmittance of absorption peaks (%) | | $PI_2/PI_1$ |
|---|---|---|---|
| | C-H Derived | O-H Derived | |
| Example 1-1 | 28 | 59 | 0.36 |
| Example 1-2 | 26 | 68 | 0.26 |
| Example 1-3 | 39 | 62 | 0.52 |
| Example 1-4 | 45 | 52 | 0.77 |

Accordingly, it can be said that all of Examples 1-1 to 1-4 are organically modified oxide fine particles in which hydroxide and/or oxyhydroxide is formed on the surface of the oxide fine particles and the particles are modified with organic molecules via the hydroxide layer and/or the oxyhydroxide layer.
The batch-type production apparatus used in Test Example 1 is a one-step process in which the hydroxide formation step and the organic modification step are performed in the same reaction apparatus. First, the oxide is gradually heated at a low temperature (in a subcritical state or under high-temperature oxidation with a slight amount of water vapor). Second, the oxide particles, on the surface of which hydroxide and/or oxyhydroxide has formed are organically modified in a reaction field of a water-based solvent in a supercritical, subcritical, or gas-phase state. In Test Example 1, the organic modifier is present from the hydroxide formation step; however, as the organic modifier used in Test Example 1 is not easily decomposed during the heating process of the oxide, its coexistence does not pose any issues. In Test Example 1, hydroxidation and/or oxyhydroxidation of the oxide is first carried out, followed by organic modification of the hydroxidated and/or oxyhydroxidated oxide particles; therefore, even though each process is conducted in the same reaction apparatus as a one-step process, the two steps, namely the hydroxide formation step and the organic modification step, are carried out in this reaction apparatus.

<Test Example 2> Continuous Production of Organically Modified CeO$_2$ Fine Particles

{Example 2}

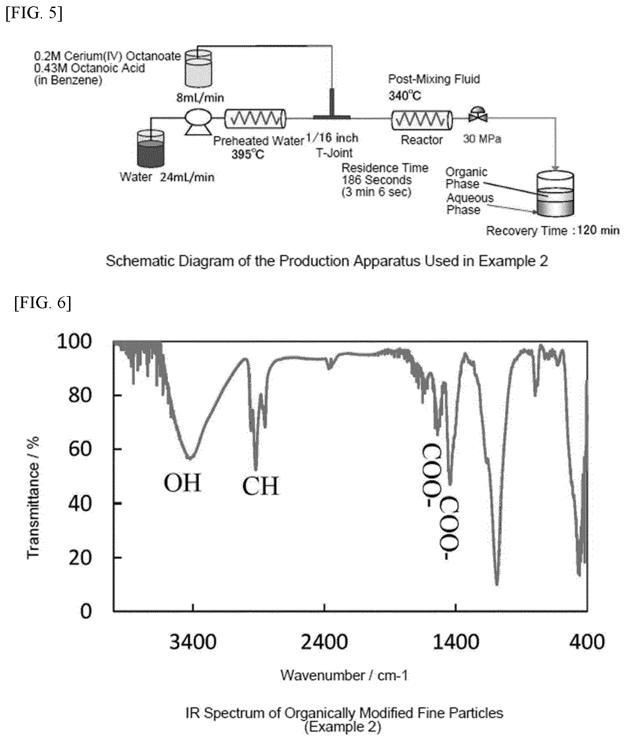

FIG. 5 is a schematic diagram of the production apparatus used in Example 2. The production apparatus used was a supercritical hydrothermal synthesis system (device name: MOMI-cho mini, manufactured by ITEC Co., Ltd.).

A benzene solution containing 0.2 mol/L of cerium(IV) octanoate and 0.43 mol/L of octanoic acid was supplied to the first inlet of a 1/16-inch T-junction at a flow rate of 8 mL/min. Additionally, preheated pure water at 395°C was supplied to the second inlet of the T-junction at a flow rate of 24 mL/min. Inside the T-junction, the cerium component contained in the raw material solution was rapidly oxidized at high temperature, forming cerium oxide particles. Hydroxide and/or oxyhydroxid were then formed on the surface of the cerium oxide particles.

Subsequently, the mixed fluid was supplied to the reactor and reacted for 186 seconds under conditions of 340°C and 30 MPa. Through this reaction, the surface of the cerium oxide particles was organically modified, yielding organically modified CeO$_2$ fine particles.

Subsequently, the product was extracted using water and benzene, and after recovering the benzene layer, the product was precipitated from the recovered liquid using ethanol, and the precipitate was washed.

{Evaluation} IR Spectrum

The infrared spectrum (IR spectrum) of the precipitate obtained in Example 2 was measured. FIG. 6 shows the IR spectrum of the precipitate obtained in Example 2. A peak attributed to the organic modifier (absorption peak in the range of 2,800-3,000 cm$^{-1}$ due to C-H) was observed in the precipitate of Example 2. As shown in Table 2, the transmittance of this peak was 54%.

Moreover, a peak attributed to hydroxides and/or oxyhydroxides (absorption peak in the range of 3,000-3,700 cm$^{-1}$ due to O-H) was also observed in Example 2. As shown in Table 2, the transmittance of this peak was 58%.

Furthermore, the ratio PI$_2$/PI$_1$ of the maximum peak intensity PI$_2$ in the closed interval with 3,000 cm$^{-1}$ and 3,700 cm$^{-1}$ as both ends, which is attributed to O-H, to the maximum peak intensity PI$_1$ in the closed interval with 2,800 cm$^{-1}$ and 3,000 cm$^{-1}$ as both ends, which is attributed to C-H, was 0.88.

[Table 2]

| | Transmittance of absorption peaks (%) | | PI$_2$/PI$_1$ |
| --- | --- | --- | --- |
| | C-H Derived | O-H Derived | |
| Example 2 | 54 | 58 | 0.88 |

Accordingly, Example 2 can be considered an organically modified oxide fine particle, in which hydroxide and/or oxyhydroxide is formed on the surface of the oxide fine particle and is modified with organic molecules via the hydroxide layer and/or the oxyhydroxide layer.

A thermogravimetric analysis was conducted on a sample weighing 31.466 mg under the conditions given below, and a weight loss of 10.8 wt% was observed.

(Conditions)

Heating from room temperature to 105°C at a rate of 10°C/min
Holding at 105°C for 30 min
Heating from 105°C to 800°C at a rate of 10°C/min
Cooling from 800°C to 50°C at a rate of -10°C/min

According to Test Example 1 and Test Example 2, regardless of the type of oxide and whether a batch or continuous process is used, a uniform organic modification of oxides can be achieved through a common method applied across the entire surface of the raw material, thereby obtaining organically modified oxide fine particles. This allows for the convenient provision of organically modified oxide fine particles with enhanced dispersibility in solvents.

Notably, when an organic modifier is added to aluminum oxide or zirconium dioxide and subjected to a rapid heating reaction (heating for about several tens of seconds) in a supercritical reaction field, the oxide is hardly organically modified. This is considered to be due to the insufficient hydroxylation and/or oxyhydroxylation of the oxide particle surface, which results in an insufficient number of binding sites for organic modification on the oxide particle surface, even if the amount of organic modifier is sufficient.

**Claims**

1. A method for producing organically modified oxide fine particles, comprising:

   a hydroxide or similar formation step of forming hydroxide and/or oxyhydroxide on the surface of oxide particles; and
   an organic modification step of organically modifying the oxide particles having the hydroxide and/or the oxyhydroxide formed on their surface in a reaction field of a supercritical, subcritical, or gas-phase aqueous solvent to obtain organically modified oxide fine particles.

2. The method according to Claim 1, wherein the organic modification step is performed subsequent to the hydroxide or similar formation step.

3. The method according to Claim 1, wherein

   a first apparatus performing the hydroxide or similar formation step and a second apparatus performing the organic modification step are physically separated, and
   the hydroxide or similar formation step is performed in the first apparatus, followed by the organic modification step in the second apparatus.

4. The method according to Claim 1, wherein

   the hydroxide or similar formation step and the organic modification step are performed in the same reaction field, the two steps are kinetically separated, and the organic modification step is performed after the hydroxide or similar formation step is performed.

5. An organically modified oxide fine particle, wherein hydroxide and/or oxyhydroxide is formed on the surface of the oxide fine particle, and it is modified with organic molecules via the hydroxide layer and/or the oxyhydroxide layer.

6. An organically modified oxide fine particle, wherein the surface is modified with organic molecules and has OH groups on the surface.

7. The fine particle according to Claim 5 or 6, wherein in Fourier transform infrared (FT-IR) spectroscopy, the ratio $PI_2/PI_1$ of the maximum peak intensity $PI_2$ in the closed interval with 3,000 $cm^{-1}$ and 3,700 $cm^{-1}$ as both ends, which is attributed to O-H, to the maximum peak intensity $PI_1$ in the closed interval with 2,800 $cm^{-1}$ and 3,000 $cm^{-1}$ as both ends, which is attributed to C-H, is 0.01 or more.

8. The fine particle according to Claim 5 or 6, wherein the coverage ratio of the molecules used for organic modification on the surface is 1% or more relative to the surface area of the fine particle.

[FIG. 1]

Reaction Mechanism

[FIG. 2A]

```
Metal Salt Aqueous Solution
as Raw Material
         │
         ▼
┌──────────────────────┐        ┌──────────────────────┐
│                      │◄───────│  High-Temperature    │◄─── Water
│ Nanoparticle Synthesis│        │  High-Pressure Water │
│                      │        │                      │
└──────────────────────┘        └──────────────────────┘
         │
         ▼
┌──────────────────────┐        ┌──────────────────────┐
│ Surface Treatment under│◄───────│  High-Temperature    │◄─── Water
│ Subcritical Conditions │        │  High-Pressure Water │
└──────────────────────┘        └──────────────────────┘
         │◄──────────────────────────────────────────────┘
         ▼
┌──────────────────────┐
│ Organic Modification │
│                      │
└──────────────────────┘
         │
         ▼
Organically Modified Oxide
Fine Particles
```

[FIG. 2B]

```
Metal Salt           Organic
Aqueous Solution     Modifier
as Raw Material
      │                 │
      ▼                 ▼
┌──────────────────────────┐        ┌──────────────────────┐
│ Rapid Mixing and Nucleation│◄───────│  High-Temperature    │◄─── Water
│                          │        │  High-Pressure Water │
└──────────────────────────┘        └──────────────────────┘
            │
            ▼
┌──────────────────────────┐
│ Organic Modification     │
│ > Dehydration            │
└──────────────────────────┘
            │
            ▼
Organically Modified Oxide
Fine Particles
```

[FIG. 3]

IR Spectrum of Organically Modified Fine Particles
(Examples 1-1, 1-2)

[FIG. 4]

IR Spectrum of Organically Modified Fine Particles
(Examples 1-3, 1-4)

[FIG. 5]

Schematic Diagram of the Production Apparatus Used in Example 2

[FIG. 6]

IR Spectrum of Organically Modified Fine Particles
(Example 2)

## INTERNATIONAL SEARCH REPORT

| International application No. |
|---|
| **PCT/JP2023/028683** |

| A. | CLASSIFICATION OF SUBJECT MATTER |
|---|---|

*C01G 25/02*(2006.01)i; *C01F 17/235*(2020.01)i
FI:  C01G25/02; C01F17/235

According to International Patent Classification (IPC) or to both national classification and IPC

| B. | FIELDS SEARCHED |
|---|---|

Minimum documentation searched (classification system followed by classification symbols)

C01G25/02; C01F17/235

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2012-197195 A (TOHOKU UNIV) 18 October 2012 (2012-10-18) claims 1-3, paragraphs [0018]-[0019], [0021], [0030], fig. 25 | 1-6, 8 |
| A | | 7 |
| Y | JP 2013-220397 A (ASAHI KASEI CHEMICALS CORP) 28 October 2013 (2013-10-28) paragraph [0061] | 1-6, 8 |
| A | | 7 |
| Y | JP 10-158015 A (ISHIHARA SANGYO KAISHA LTD) 16 June 1998 (1998-06-16) claim 1 | 1-6, 8 |
| A | | 7 |
| A | JP 2005-193237 A (TOHOKU TECHNO ARCH CO LTD) 21 July 2005 (2005-07-21) entire text | 1-8 |
| A | JP 2006-282503 A (TOHOKU TECHNO ARCH CO LTD) 19 October 2006 (2006-10-19) entire text | 1-8 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/028683**

| Patent document cited in search report | | | Publication date (day/month/year) | Patent family member(s) | Publication date (day/month/year) |
|---|---|---|---|---|---|
| JP | 2012-197195 | A | 18 October 2012 | (Family: none) | |
| JP | 2013-220397 | A | 28 October 2013 | (Family: none) | |
| JP | 10-158015 | A | 16 June 1998 | (Family: none) | |
| JP | 2005-193237 | A | 21 July 2005 | (Family: none) | |
| JP | 2006-282503 | A | 19 October 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3925932 B